# EUROPEAN PATENT SPECIFICATION

(11) **EP 2 420 746 B1**
(45) Date of publication and mention of the grant of the patent: **13.01.2016**
(21) Application number: 10764229.0
(22) Date of filing: 07.04.2010
(51) Int. Cl.: F24D 3/18, F24D 3/08, F24D 3/10, F24D 17/02, F24D 19/10, F25B 30/02

(54) **HEAT PUMP HEATING DEVICE**
WÄRMEPUMPENERHITZUNGSVORRICHTUNG
DISPOSITIF DE CHAUFFAGE DE TYPE POMPE À CHALEUR

(30) Priority: 13.04.2009 JP 2009096623
(43) Date of publication of application: 22.02.2012
(73) Proprietor: Panasonic Intellectual Property Management Co., Ltd., Osaka 540-6207 (JP)
(72) Inventor: Takeshi, OGATA, Osaka-shi, Osaka 540-6207 (JP); Atsuo, OKAICHI, Osaka-shi, Osaka 540-6207 (JP); Yuichi, YAKUMARU, Osaka-shi, Osaka 540-6207 (JP); Hiroshi, HASEGAWA, Osaka-shi, Osaka 540-6207 (JP)
(74) Representative: Eisenführ Speiser
(86) International application number: PCT/JP2010/002542
(87) International publication number: WO 2010/119642

(56) References cited:
- DE-U1-202005 013 499
- JP-A- 2002 162 123
- JP-A- 2002 162 123
- JP-A- 2004 198 045
- JP-A- 2005 274 021
- JP-A- 2006 300 487
- JP-A- 2008 039 306
- SARKAR J ET AL: "OPTIMIZATION OF A TRANSCRITICAL CO2 HEAT PUMP CYCLE FOR SIMULTANEOUS COOLING AND HEATING APPLICATIONS", INTERNATIONAL JOURNAL OF REFRIGERATION, ELSEVIER, PARIS, FR, vol. 27, no. 8, 9 March 2004 (2004-03-09), pages 830-838, XP008040143, ISSN: 0140-7007, DOI: 10.1016/J.IJREFRIG.2004.03.006

## Description

### TECHNICAL FIELD

The present invention relates to a heat pump heating system for performing heating through the use of a heated liquid produced by a heat pump (refrigeration cycle apparatus).

### BACKGROUND ART

Conventionally, there has been known a heat pump heating system for producing hot water by a heat pump and performing heating through the use of this hot water. For example, JP 2008-039306 A discloses a heat pump heating system 100 as shown in FIG. 10. This heat pump heating system 100 includes a heat pump 200 having a refrigerant circuit 10 for circulating a refrigerant and a circulation path 16 for circulating water.

The refrigerant circuit 10 includes a compressor 11, a radiator 12, an expansion valve 13, and an evaporator 14, which are connected in this order by pipes. The circulation path 16 has a hot water storage tank 15. Water is taken out of the hot water storage tank 15 and fed to the radiator 12, where hot water is produced. This hot water is stored in the hot water storage tank 15. The hot water stored in the hot water storage tank 15 is fed to, for example, a heater 17 disposed in a room, releases heat there, and then is returned to the hot water storage tank 15.

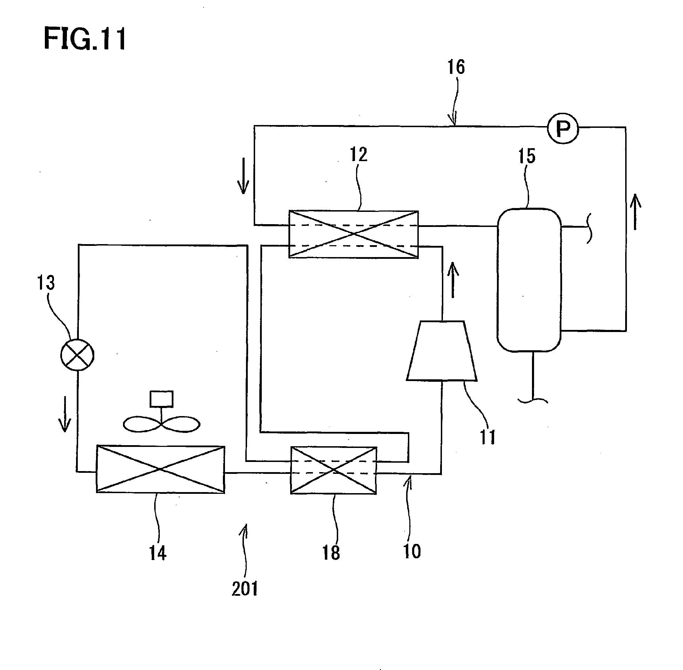

Recently, there have been proposals to provide an internal heat exchanger in a heat pump. For example, JP 2006-300487 A discloses, as a heat pump for hot water supply, a heat pump 201 including an internal heat exchanger 18 as shown in Fig. 11. The internal heat exchanger 18 is designed to exchange heat between a high pressure refrigerant flowing out of a radiator 12 and a low pressure refrigerant flowing out of an evaporator 14. With this structure, the temperature of the low pressure refrigerant drawn into a compressor 11 increases, which produces higher temperature hot water.

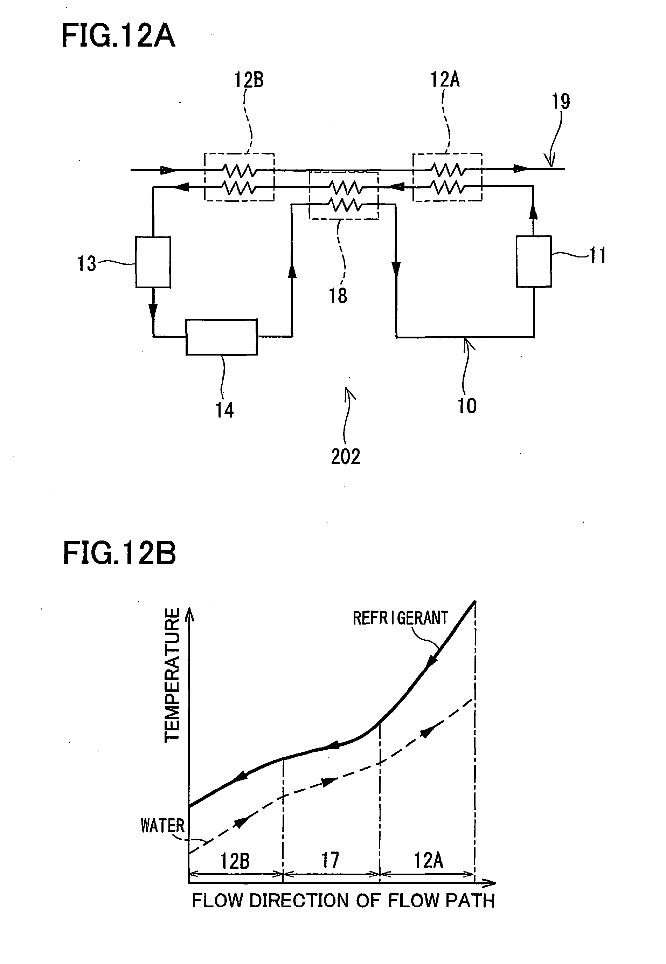

Furthermore, JP 2002-162123 A which is considered being the closest prior art, discloses a heat pump 202 as shown in Fig. 12A. This heat pump 202 is provided with a first radiator 12A and a second radiator 12B as radiators for allowing a refrigerant to release heat. A high pressure refrigerant that has released heat in the first radiator 12A releases heat in the internal heat exchanger 18, and then is introduced into the second radiator 12B and further releases heat there. On the other hand, water flowing through a flow path 19 is heated in the second radiator 12B and then further heated in the first radiator 12A, as shown in Fig. 12B.

### SUMMARY OF INVENTION

### Technical Problem

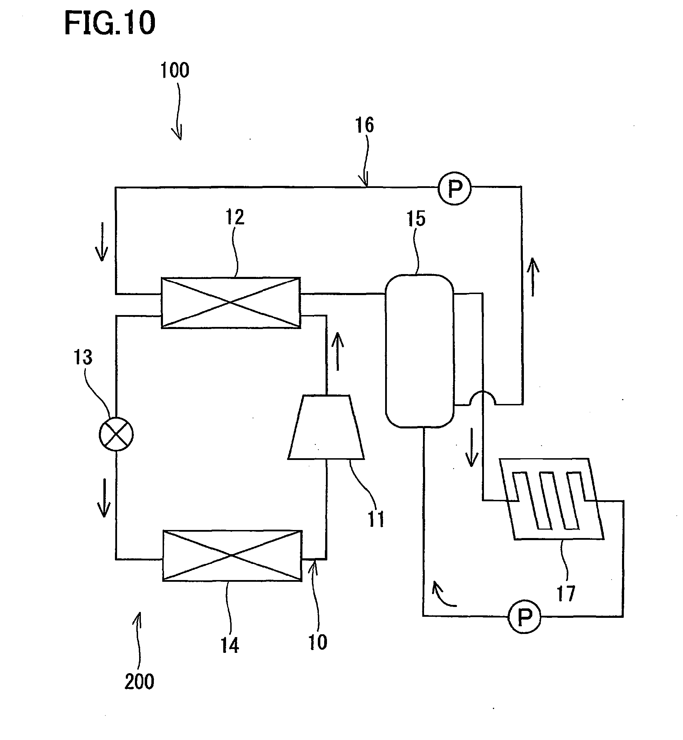

In the heat pump heating system 100 shown in Fig. 10, for example, during a long heating operation, in some cases, the temperature of water does not decrease so much in the heater 17 and medium temperature water (for example, at about 40°C to 60°C) is supplied to the radiator 12 of the heat pump 200. When such medium temperature water is supplied to the radiator 12, however, the heat exchange efficiency of the radiator 12 decreases, resulting in a decrease in the COP (Coefficient of Performance) of the heat pump 200. This problem also occurs when the heat pump 201 shown in Fig. 11 or the heat pump 202 shown in Fig. 12A is used as a heat pump for the heat pump heating system 100 shown in Fig. 10.

The present invention has been made in view of the above problem, and it is an object of the present invention to improve the COP of a heat pump in a heat pump heating system even if a medium temperature liquid is fed to the heat pump.

### Solution to Problem

In order to solve the above problem, the present invention provides a heat pump heating system including: a refrigerant circuit including a compressor for changing a low pressure refrigerant to a high pressure refrigerant, a radiator for allowing the high pressure refrigerant to release heat, an expansion member for changing the high pressure refrigerant to the low pressure refrigerant, and an evaporator for allowing the low pressure refrigerant to absorb heat; a circulation path for circulating a liquid through the radiator to produce a heated liquid; a heater for dissipating heat of the heated liquid; an internal heat exchanger, provided in the refrigerant circuit, for transferring heat from the high pressure refrigerant that has released heat in the radiator to the low pressure refrigerant; and a liquid cooling heat exchanger provided on a downstream side of the internal heat exchanger and on an upstream side of the expansion member in the refrigerant circuit, the liquid cooling heat exchanger receiving the high pressure refrigerant flowing out of the internal heat exchanger, the liquid cooling heat exchanger further provided on a downstream side of the heater in the circulation path for circulating a liquid, the liquid cooling heat exchanger heater being configured to cool the liquid flowing through the circulation path by means of exchanging heat between the high pressure refrigerant flowing out of the internal heat exchanger and the liquid flowing out of the heater, before the liquid flows into the radiator.

### Advantageous Effects of Invention

According to the heat pump heating system of the present invention configured as described above, a low temperature liquid can be introduced into the radiator even if the temperature of the liquid is medium when it is fed to the heat pump. Therefore, the COP of the heat pump can be improved.

### BRIEF DESCRIPTION OF DRAWINGS

Fig. 1 is a schematic configuration diagram of a heat pump heating system according to a first embodiment of the present invention.
Fig. 2 is a Mollier diagram of a heat pump used in the heat pump heating system shown in Fig. 1.
Fig. 3 is a schematic configuration diagram of a heat pump heating system according to a modification of the first embodiment of the present invention.
Fig. 4 is a schematic configuration diagram of a heat pump heating system according to a second embodiment of the present invention.
Fig. 5 is a Mollier diagram of a heat pump used in the heat pump heating system shown in Fig. 4.
Fig. 6 is a schematic configuration diagram of a heat pump heating system according to a third embodiment of the present invention.
Fig. 7 is a schematic configuration diagram of a heat pump heating system according to a fourth embodiment of the present invention.
Fig. 8 is a schematic configuration diagram of a heat pump heating system according to a fifth embodiment of the present invention.
Fig. 9 is a schematic configuration diagram of a heat pump heating system according to a sixth embodiment of the present invention.
Fig. 10 is a schematic configuration diagram of a conventional heat pump heating system.
Fig. 11 is a schematic configuration diagram of a conventional heat pump.
Fig. 12A is a schematic configuration diagram of another conventional heat pump, and Fig. 12B is a graph showing the temperatures of a refrigerant and water passing through first and second radiators in the heat pump shown in Fig. 12A.

### DESCRIPTION OF EMBODIMENTS

Hereinafter, embodiments of the present invention will be described with reference to the drawings.

### (First Embodiment)

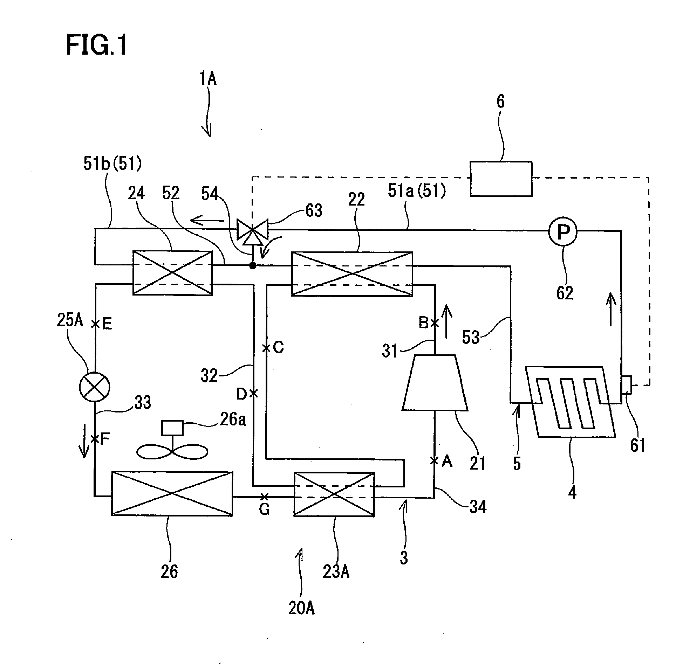

Fig. 1 shows a heat pump heating system 1A according to the first embodiment of the present invention. This heat pump heating system 1A includes a heat pump 20A having a refrigerant circuit 3 for circulating a refrigerant, a circulation path 5 for circulating a liquid, and a controller 6 for controlling the elements totally.

The circulation path 5 is designed to circulate the liquid through a radiator 22 described later to produce a heated liquid. In the present embodiment, a heater 4 for dissipating the heat of the heated liquid is incorporated in the circulation path 5, so that the liquid is circulated without stopping and the heated liquid thus produced releases heat directly in the heater 4. That is, the circulation path 5 also serves as a heating circuit.

In the present embodiment, water is used as the liquid serving as a heat carrier. The liquid of the present invention is not necessarily limited to this. Any liquid can be used as long as it can receive heat from the refrigerant circulating through the refrigerant circuit 3 and release heat into the atmosphere in the heater 4. As the liquid, for example, an antifreeze mixture of propylene glycol or the like and water can be used. The following description will be made on the assumption that the liquid is water and the heated liquid is hot water.

The refrigerant circuit 3 includes a compressor 21 for changing a low pressure refrigerant to a high pressure refrigerant, a radiator 22 for allowing the high pressure refrigerant to release heat, an expansion valve 25A serving as an expansion member for changing the high pressure refrigerant to the low pressure refrigerant, an evaporator 26 for allowing the low pressure refrigerant to absorb heat, and first to fourth pipes 31 to 34 connecting these devices in this order. In the radiator 22, heat is exchanged between the water passing through the radiator 22 and the refrigerant, and thereby the water is heated. In the evaporator 26, heat is exchanged between the refrigerant and air blown by a fan 26a, and thereby the refrigerant absorbs heat. In the present embodiment, the refrigerant circuit 3 is filled with carbon dioxide, which reaches a supercritical state on the high pressure side, as the refrigerant. An internal heat exchanger 23A is provided in the refrigerant circuit 3 so as to bundle the second pipe 32 and the fourth pipe 34. A liquid cooling heat exchanger 24 is provided on the downstream side of the internal heat exchanger 23Ain the second pipe 32.

The internal heat exchanger 23A is designed to exchange heat between the high pressure refrigerant flowing out of the radiator 22 and the low pressure refrigerant flowing out of the evaporator 26 so as to transfer heat from the high pressure refrigerant that has released heat in the radiator 22 to the low pressure refrigerant. The liquid cooling heat exchanger 24 is designed to cool the water flowing through the circulation path 5 by means of the high pressure refrigerant flowing out of the internal heat exchanger 23A, before the water flows into the radiator 22.

The heater 4 is designed to heat, for example, a room by heat dissipation from hot water. As the heater 4, for example, a heat dissipating device to be placed in a room may be used. A hot water panel to be laid on a floor also may be used.

The circulation path 5 includes a supply pipe 51 for introducing the water from the heater 4 to the liquid cooling heat exchanger 24, an intermediate pipe 52 for introducing the water from the liquid cooling heat exchanger 24 to the radiator 22, and a recovery pipe 53 for introducing the water in the form of hot water from the radiator 22 to the heater 4. In the present embodiment, the supply pipe 51 is provided with a pump 62. The supply pipe 51 is further provided with a temperature sensor 61 for detecting the temperature of the water flowing into the supply pipe 51 from the heater 4.

The intermediate pipe 52 and the downstream part of the pump 62 in the supply pipe 51 are connected by a bypass pipe 54. Specifically, the supply pipe 51 is provided with a three-way valve 63, and the upstream end of the bypass pipe 54 is joined to this three-way valve 63. The downstream end of the bypass pipe 54 is joined to the middle of the intermediate pipe 52.

The three-way valve 63 is designed to switch between a circulation of the water not through the bypass pipe 54, that is, a circulation of the water passing through both of the liquid cooling heat exchanger 24 and the radiator 22, and a circulation of the water through the bypass pipe 54, that is, a circulation of the water passing only through the radiator 22. The three-way valve 63 corresponds to the switching member of the present invention. It should be noted that the switching member of the present invention is not necessarily be the three-way valve 63. For example, the switching member may be replaced by an on-off valve provided in the bypass pipe 54 and an on-off valve provided in the downstream of the point of the supply pipe 51 to which the bypass pipe 54 is joined.

The controller 6 is composed of a microcomputer, a DSP (digital signal processor), or the like, and is connected to the above-mentioned heat pump 20A, and the pump 62, the temperature sensor 61, and the three-way valve 63.

Next, the control performed by the controller 6 is described specifically.

When a user turns on a heating switch (not shown), for example, the controller 6 operates the heat pump 20A and rotates the pump 62. Thereby, the water is heated in the radiator 22 to produce hot water, and this hot water is fed to the heater 4 to perform heating.

During this heating operation, the controller 6 uses the temperature sensor 61 to monitor the temperature of the water flowing into the supply pipe 51. When the water temperature detected by the temperature sensor 61 is lower than a predetermined temperature (for example, 20°C) (hereinafter referred to as a "low temperature condition"), the controller 6 controls the three-way valve 63 so that the water is circulated through the bypass pipe 54. Specifically, the controller 6 sets the three-way valve 63 so that the bypass pipe 54 is communicated with the upstream part 51a of the three-way valve 63 in the supply pipe 51. As a result, the first route passing only through the radiator 22 is selected.

In the low temperature condition, the refrigerant circulating through the refrigerant circuit 3 operates in the following manner. The refrigerant is compressed by the compressor 21 to a high temperature and high pressure state, and then the resulting refrigerant flows into the radiator 22, where it transfers heat to the water flowing through the circulation path 5. After flowing out of the radiator 22, the refrigerant flows into the internal heat exchanger 23A, where it further transfers heat to the refrigerant flowing out of the evaporator 26. After flowing out of the internal heat exchanger 23A, the refrigerant passes through the liquid cooling heat exchanger 24 while maintaining its state, and is decompressed by the expansion valve 25A to expand to a low temperature and low pressure state. The expanded refrigerant flows into the evaporator 26, where it absorbs heat from air. After flowing out of the evaporator 26, the refrigerant flows into the internal heat exchanger 23A, where it further absorbs heat from the refrigerant flowing out of the radiator 22. After flowing out of the internal heat exchanger 23A, the refrigerant is drawn into the compressor 21 again and compressed there.

On the other hand, the water circulating through the circulation path 5 (first route) is heated in the radiator 22, and the resulting hot water flows into the heater 4 and releases heat to the atmosphere. After releasing heat in the heater 4, the water flows into the radiator 22 again and is heated to hot water.

Conversely, when the water temperature detected by the temperature sensor 61 is equal to or higher than the above predetermined temperature (hereinafter referred to as a "medium temperature condition"), the controller 6 controls the three-way valve 63 so that the water is circulated not through the bypass pipe 54. Specifically, the controller 6 sets the three-way valve 63 so that the upstream part 51a and the downstream part 51b of the three-way valve 63 in the supply pipe 51 are communicated with each other. As a result, the second route passing through both of the liquid cooling heat exchanger 24 and the radiator 22 is selected.

In the medium temperature condition, the water flowing into the liquid cooling heat exchanger 24 has a higher temperature than the refrigerant flowing into the liquid cooling heat exchanger 24. The refrigerant circulating in the refrigerant circuit 3 operates in the following manner. The refrigerant is compressed by the compressor 21 to a high temperature and high pressure state, and then the resulting refrigerant flows into the radiator 22, where it transfers heat to the water flowing through the circulation path 5. After flowing out of the radiator 22, the refrigerant flows into the internal heat exchanger 23A, where it further transfers heat to the refrigerant flowing out of the evaporator 26. After flowing out of the internal heat exchanger 23A, the refrigerant flows into the liquid cooling heat exchanger 24, where it exchanges heat with the water flowing through the circulation path 5. As a result, the refrigerant is heated almost to the temperature of the water flowing into the liquid cooling heat exchanger 24. After flowing out of the liquid cooling heat exchanger 24, the refrigerant is decompressed by the expansion valve 25A to expand to a low temperature and low pressure state. Then, it flows into the evaporator 26, where it absorbs heat from air. After flowing out of the evaporator 26, the refrigerant flows into the internal heat exchanger 23A, where it further absorbs heat from the refrigerant flowing out of the radiator 22. After flowing out of the internal heat exchanger 23A, the refrigerant is drawn into the compressor 21 again and compressed there.

On the other hand, the water circulating through the circulation path 5 (second route) is heated in the radiator 22, and the resulting hot water flows into the heater 4 and releases heat to the atmosphere and becomes medium temperature water. After flowing out of the heater 4, the medium temperature water flows into the liquid cooling heat exchanger 24, where it exchanges heat with the refrigerant flowing out of the internal heat exchanger 23A. As a result, the water is cooled to a low temperature state. The low temperature water flows into the radiator 22 again, and is heated to hot water.

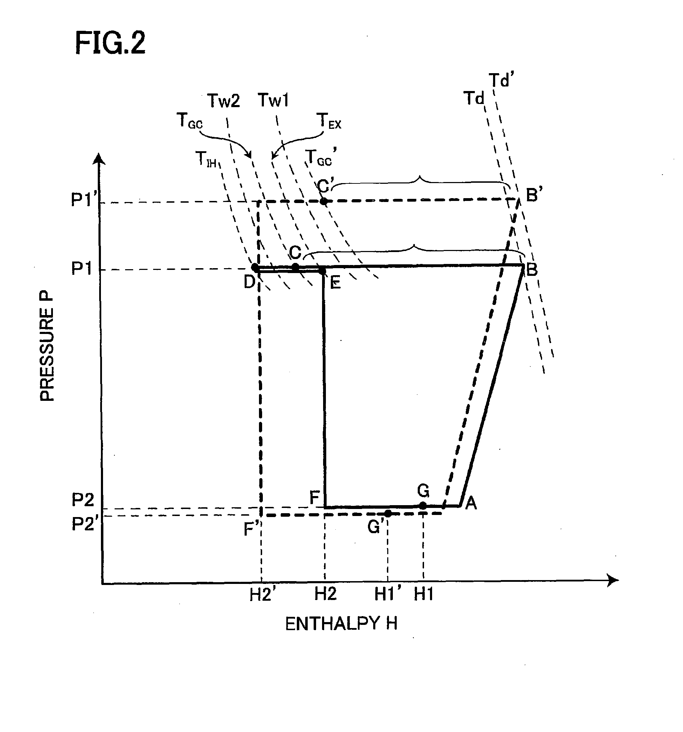

Fig. 2 shows a Mollier diagram of the heat pump 20A used in the present embodiment, under the medium temperature condition. In this diagram, a broken line shows a Mollier diagram of the heat pump 201 without the liquid cooling heat exchanger, as shown in Fig. 11. Points A to F in Fig. 2 represent the states at "x" marks A to F in Fig. 1.

In the heat pump 201 without the liquid cooling heat exchanger, shown in Fig. 11, as the refrigerant passes through the radiator, the temperature of the refrigerant falls from a high temperature Td' (Point B') resulting from the compressor to a temperature T_{GC}' (Point C') that is about a temperature Tw1 of the medium temperature water returning from the heater. After passing through the radiator, the refrigerant further lowers its temperature in the internal heat exchanger and then is decompressed by the expansion valve. The enthalpy of the decompressed refrigerant increases from H2'(Point F') to H1'(Point G') as the refrigerant passes through the evaporator, and further increases as it passes through the internal heat exchanger.

On the other hand, in the heat pump 20A used in the present embodiment, since the water to flow into the radiator 22 is cooled in the liquid cooling heat exchanger 24, the temperature of the water is Tw2 (< Tw1). Accordingly, the temperature of the refrigerant at the outlet of the radiator 22 is T_{GC} (Point C), which is lower than that in the conventional heat pump 201. After passing through the radiator 22, the refrigerant lowers its temperature to T_{IH} (Point D) in the internal heat exchanger 23A, and then is warmed to T_{EX} (Point E) by the liquid cooling heat exchanger 24. Then, the refrigerant is decompressed by the expansion valve 3. As shown in this diagram, the enthalpy H2 (Point F) of the decompressed refrigerant is higher than that H2' in the conventional heat pump 201 (H2 > H2') because the refrigerant is decompressed after it is heated by the liquid cooling heat exchanger 24. Therefore, the enthalpy increment (ΔH = H1 - H2) in the evaporator 4 is smaller than that (ΔH'= H1' - H2') in the conventional heat pump 201.

As described above, in the heat pump heating system 1A of the present embodiment, low temperature water can be introduced into the radiator 22 even if the temperature of the water is medium when it is fed to the heat pump 20A. Therefore, the COP of the heat pump 20A can be improved.

Furthermore, according to the present embodiment, the temperature of the refrigerant at the outlet of the radiator 22 can be reduced to a lower level than that in the conventional heat pump 201. Therefore, the optimum high pressure (high pressure at which the COP of the heat pump is highest) for the temperature of the refrigerant at the outlet of the radiator 22 can be lowered. Accordingly, the differential pressure between the high pressure and the low pressure of the refrigeration cycle can be reduced, and thus the differential pressure force applied to the compression part of the compressor 21 can be lessened. As a result, the leakage loss of the refrigerant and the friction loss are reduced, and thus the efficiency of the compressor 21 can be improved. In addition, since the high pressure of the refrigeration cycle can be lowered, the reliability of the refrigerant circuit 3 also can be improved. Moreover, the pressure resistance strength required for the constituent components can be reduced, and therefore the heating system can be manufactured at lower cost.

Furthermore, since the discharge pressure of the compressor 21 decreases, the temperature of the refrigerant discharged from the compressor 21 can be lowered. Therefore, the deterioration of the components caused by the discharged high temperature refrigerant can be reduced, and the reliability of the elements can be improved. Particularly in the case where the outside temperature drops significantly (to about -5°C to -15°C), the problem of an increase in the temperature of the refrigerant discharged from the compressor can be addressed effectively.

Furthermore, since the enthalpy increment in the evaporator 26 is smaller, the low pressure is higher than that of the conventional heat pump 201. Therefore, the differential pressure between the high pressure and the low pressure of the refrigeration cycle can further be reduced, and thus the differential pressure force applied to the compression part of the compressor 21 can further be lessened. Moreover, since the pressure inside the evaporator 26 increases, the average temperature of the evaporator 26 rises. As a result, when frost forms, the load of defrosting operation can be reduced, and thus the energy consumed by the heat pump 20A can be reduced and the efficiency of the elements can be improved.

The heat pump 202 disclosed in JP 2002-162123 A and shown in Fig. 12A apparently seems to have a configuration similar to that of the heat pump 20A of the present embodiment. In the heat pump 202 ofJP 2002-162123 A, however, the first radiator 12A and the second radiator 12B are disposed with the internal heat exchanger 18 being interposed therebetween, and the temperature of the refrigerant only continues to fall and the temperature of the water only continues to rise, as shown in Fig. 12B, which is distinctly different from the action of the heat pump 20A of the present embodiment. Furthermore, JP 2002-162123 A not only fails to describe the circulation of water but also fails to describe that the water in the form of medium temperature water is returned to the heat pump.

In the present embodiment, the bypass pipe 54 and the three-way valve 63 serving as a switching member are provided to select the circulation of the water through either the first route or the second route. However, these members may be omitted so that the water always passes through both of the liquid cooling heat exchanger 24 and the radiator 22. However, it is preferable to provide the bypass pipe 54 and the switching member in the circulation path 5, as in the present embodiment, for the following reasons: the water can be prevented from being heated in the liquid cooling heat exchanger 24 by passing through the second route when the water temperature detected by the temperature sensor 61 is lower than a predetermined temperature; and the efficiency of the refrigeration cycle can be kept high by switching the first route and the second route so that the temperature of the water flowing into the radiator 22 is lowered as much as possible.

The liquid cooling heat exchanger 24 and the radiator 22 used in the present embodiment are both heat exchangers for exchanging heat between water and a refrigerant. Therefore, these devices 24 and 22 can also be manufactured integrally as a single water-refrigerant heat exchanger. In this case, the refrigerant flow path and the water flow path included in the water-refrigerant heat exchanger each can be divided into two. With this structure, a compact heat exchanger can be designed. Therefore, not only the unit (for example, a heat pump unit) in the heating system can be downsized but also the manufacturing cost can be reduced.

### <Modification>

In the embodiment described above, hot water heated in the refrigerant circuit 3 releases heat to the atmosphere in the heater 4. The heater 4 also may be used as a heating source for hot water supply or snow melting. Needless to say, the same advantageous effects as above are obtained in these applications.

In the embodiment described above, carbon dioxide is used as the refrigerant. Any refrigerant can be used in the present invention as long as it has the property of decreasing the optimum high pressure as its temperature at the outlet of the radiator 22 decreases. Furthermore, since the difference between the temperature of the refrigerant at the inlet of the radiator 22 and that at the outlet of the radiator 22 increases as the temperature of the refrigerant at the outlet of the radiator 22 decreases, the heat exchange efficiency of the radiator 22 is improved, and as a result, the high pressure drops. Therefore, needless to say, the same advantageous effects as above are obtained even if the refrigerant, like a fluorocarbon refrigerant, does not reach a supercritical state on the high pressure side during the normal operation.

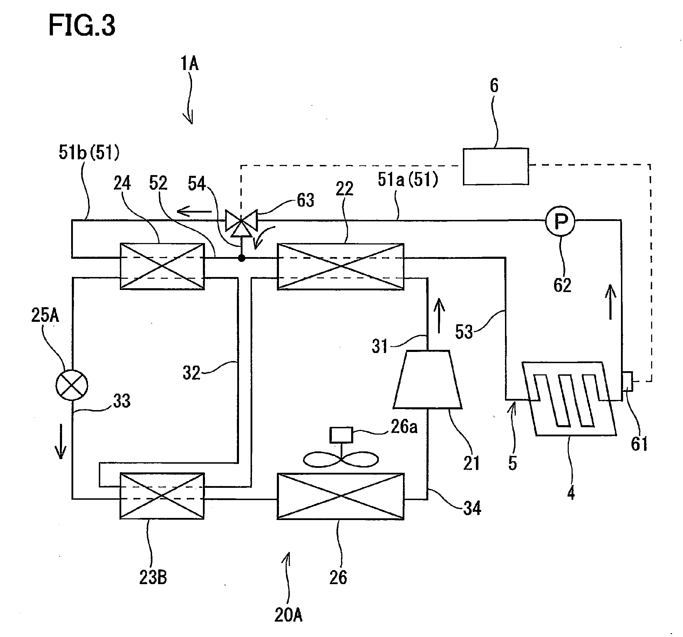

Furthermore, in the embodiment described above, the internal heat exchanger 23Ais used to exchange heat between the high pressure refrigerant flowing out of the radiator 22 and the low pressure refrigerant flowing out of the evaporator 26. Instead, an internal heat exchanger 23B may be used to exchange heat between the high pressure refrigerant flowing out of the radiator 22 and the low pressure refrigerant before flowing into the evaporator 26, as shown in Fig. 3.

Alternatively, the compressor 21 may include a main compressor and an auxiliary compressor connected in parallel thereto.

It should be noted that the above modification can also be applied to the embodiments below.

### (Second Embodiment)

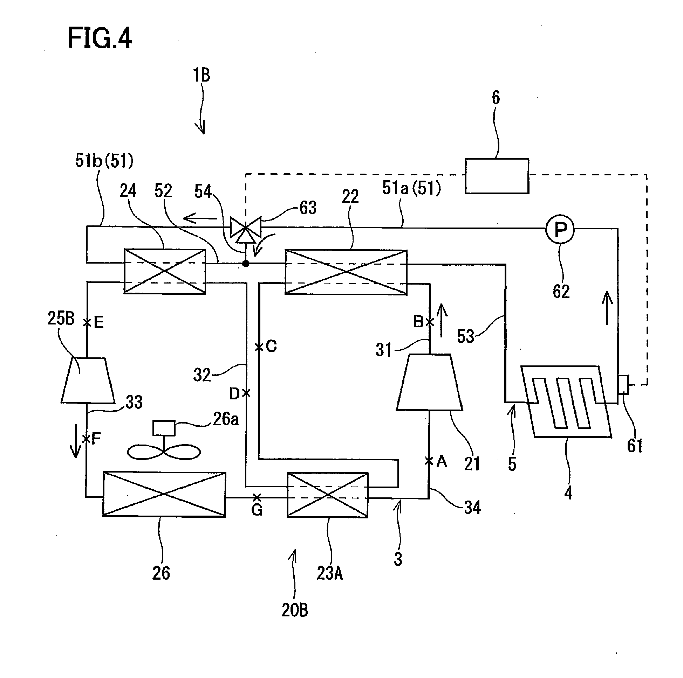

Fig. 4 shows a heat pump heating system 1B according to the second embodiment of the present invention. As shown in Fig. 4, the heat pump heating system 1B of the second embodiment has the almost same configuration as the heat pump heating system 1A of the first embodiment. Therefore, the same reference numerals are assigned to the components having the same functions, and no further description of the same configuration and operation is given. The same description is not repeated also in the third to fifth embodiments described below.

The only difference between the heat pump heating system 1B of the present embodiment and the heat pump heating system 1A of the first embodiment is that in the former system 1B, an expander 25B for recovering power from an expanding refrigerant is used as the expansion member. The same advantageous effects can be obtained in the present embodiment as in the first embodiment.

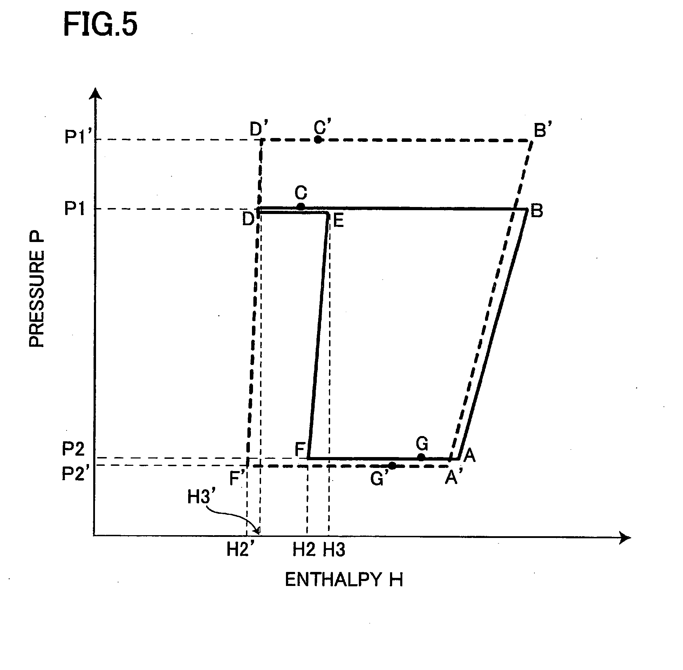

Fig. 5 shows a Mollier diagram of a heat pump 20B used in the present embodiment, under the medium temperature condition. In this diagram, a broken line shows a Mollier diagram of a heat pump without a liquid cooling heat exchanger.

In the heat pump without the liquid cooling heat exchanger, the enthalpy of the refrigerant at the inlet of the expander is H3', and the enthalpy of the refrigerant at the outlet of the expander, where the refrigerant has undergone adiabatic expansion changes (isentropic changes) from D' to F', is H2'. On the other hand, in the heat pump 20B used in the present embodiment, after passing through the radiator 22, the refrigerant lowers its temperature in the internal heat exchanger 23A, then is warmed to Point E in the liquid cooling heat exchanger 24, and drawn into the expander 25B. At this time, the enthalpy of the refrigerant at the inlet of the expander 25B is H3, and the enthalpy of the refrigerant at the outlet of the expander 25B, where the refrigerant has undergone adiabatic expansion changes from D to F, is H2.

Generally, the enthalpy change (ΔH) during the adiabatic expansion changes increases as the enthalpy of a refrigerant drawn into an expander increases. The energy of power that can be recovered by the expander is proportional to this enthalpy change. Therefore, the energy of power that can be recovered by the expander increases as the enthalpy of the refrigerant drawn into the expander increases. Therefore, the expansion energy that can be recovered by the expander 25A used in the present embodiment is much greater than the expansion energy that can be recovered by the expander in the heat pump without the liquid cooling heat exchanger. As a result, by using the recovered expansion energy as, for example, a part of the power input to the compressor 21, the COP of the heat pump 20B can be improved dramatically.

Furthermore, since the optimum high pressure can be lowered in the refrigerant circuit 3 of the present embodiment, the difference between the high pressure and the low pressure that acts on the expander 25B can be reduced. Therefore, the leakage loss of the refrigerant and the friction loss are reduced, and thus the efficiency of the expander 25B can be improved. As a result, more expansion energy can be obtained.

### (Third Embodiment)

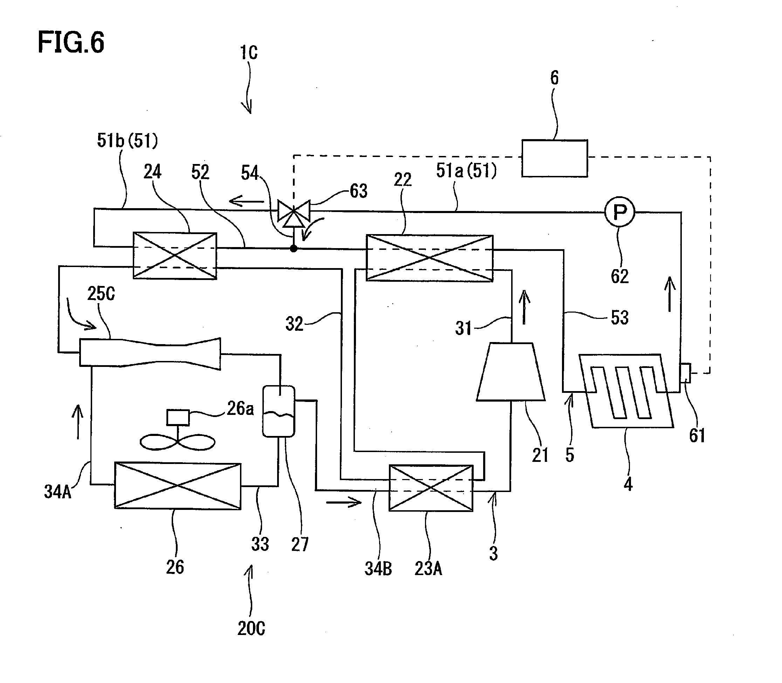

Fig. 6 shows a heat pump heating system 1C according to the third embodiment of the present invention. The heat pump heating system 1C of the present embodiment is different from the heat pump heating system 1A of the first embodiment in that an ejector 25C is used as the expansion member.

Specifically, the ejector 25C is connected to the radiator 22 by the second pipe 32 and to the evaporator 26 by the third pipe 33. A gas-liquid separator 27 is provided in the middle of the third pipe 33. Furthermore, the evaporator 26 is connected to the ejector 25C by a divided fourth pipe 34A, and the gas phase portion of the gas-liquid separator 27 is connected to the compressor 21 by a divided fourth pipe 34B. In the present embodiment, the internal heat exchanger 23A is provided so as to bundle the second pipe 32 and the divided fourth pipe 34B.

In the present embodiment, the refrigerant that has passed through the internal heat exchanger 23A and the liquid cooling heat exchanger 24 flows into the ejector 25C and expands there. The refrigerant flowing out of the ejector 25C is separated into a gas refrigerant and a liquid refrigerant. The liquid refrigerant is fed to the evaporator 26 and evaporated there, and then flows into the ejector 25C again. On the other hand, the gas refrigerant separated by the gas-liquid separator 27 flows into the internal heat exchanger 23A and is heated there by the refrigerant that has released heat in the radiator 22. The other operations and actions of the refrigerant and water are the same as those in the first embodiment.

The same advantageous effects can be obtained in the present embodiment as in the first embodiment. Furthermore, according to the present embodiment, the expansion energy can be increased, as in the second embodiment. Therefore, the flow velocity of the refrigerant in the ejector 25C can be increased, and thus the pressure of the refrigerant drawn into the compressor 21 can further be increased. Accordingly, the compression power required for the compressor 21 can be reduced, and thus the COP of the heat pump 20C can be improved.

### (Fourth Embodiment)

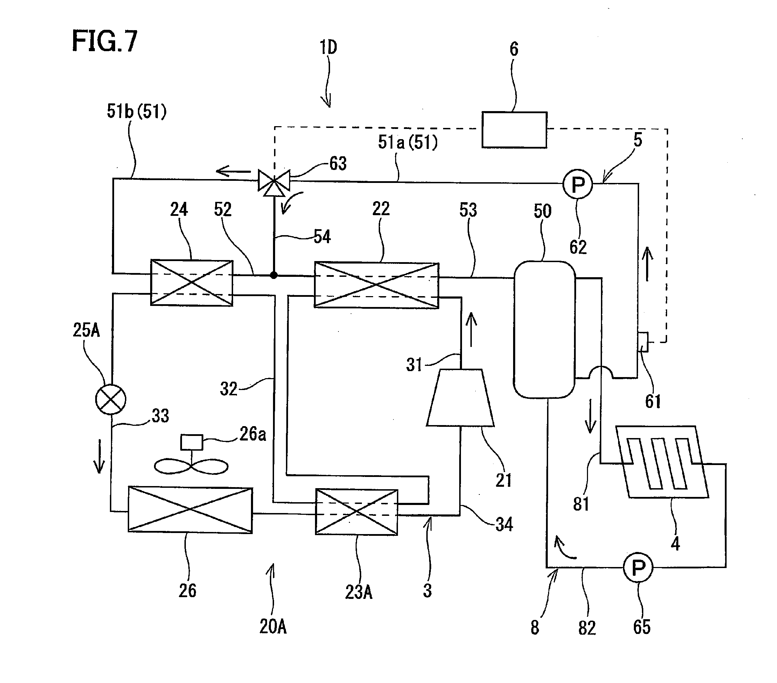

Fig. 7 shows a heat pump heating system 1D according to the fourth embodiment of the present invention. The heat pump heating system 1D of the present embodiment is different from the heat pump heating system 1A of the first embodiment in that the circulation path 5 is provided with a hot water storage tank 50 instead of the heater 4.

The hot water storage tank 50 is a vertically extending cylindrical closed casing and is filled with water. The lower portion of the hot water storage tank 50 is connected to the liquid cooling heat exchanger 24 by the supply pipe 51, and the upper portion thereof is connected to the radiator 22 by the recovery pipe 53. When the pump 62 is rotated, the water is introduced from the lower portion of the hot water storage tank 50 to the liquid cooling heat exchanger 24 through the supply pipe 31, and the water in the form of hot water is introduced from the radiator 22 to the upper portion of the hot water storage tank 50 through the recovery pipe 53. Thereby, the hot water is stored in the hot water storage tank 50 from the top. Furthermore, in the present embodiment, the temperature of the water flowing into the supply pipe 51 from the hot water storage tank 51 is detected by the temperature sensor 61 provided in the supply pipe 51.

On the other hand, the heater 4 is connected to the upper portion of the hot water storage tank 50 by a feed pipe 81, and to the lower portion of the hot water storage tank 50 by a return pipe 82. In the present embodiment, a heating pump 65 is provided in the return pipe 82, but the heating pump 65 may be provided in the feed pipe 81. The heating pump 65 is connected to the controller 6. When the heating pump 65 is rotated, the hot water stored in the hot water storage tank 50 is fed to the heater 4 through the feed pipe 81, and the hot water that has released heat in the heater 4 is returned to the hot water storage tank 50. That is, the hot water storage tank 50, the feed pipe 81, the heater 4, and the return pipe 82 constitute a heating circuit 8.

Next, the control performed by the controller 6 is described specifically.

### <Hot water storage operation>

When the controller 6 determines, with a sensor (not shown) provided in the hot water storage tank 50, that the amount of hot water left in the hot water storage tank 50 is insufficient, it operates the heat pump 20A and rotates the pump 62. Thereby, the water is heated in the radiator 22 to produce hot water, and this hot water is fed to the hot water storage tank 50 for the storage of hot water.

During this hot water storage operation, the controller 6 uses the temperature sensor 61 to monitor the temperature of the water flowing into the supply pipe 51. When the water temperature detected by the temperature sensor 61 is lower than a predetermined temperature (low temperature condition), the controller 6 controls the three-way valve 63 so that the water is circulated through the bypass pipe 54. Specifically, the controller 6 sets the three-way valve 63 so that the bypass pipe 54 is communicated with the upstream part 51a of the three-way valve 63 in the supply pipe 51. As a result, the first route passing only through the radiator 22 is selected.

In the low temperature condition, the refrigerant circulating through the refrigerant circuit 3 operates in the same manner as in the first embodiment. On the other hand, the water circulating through the circulation path 5 (first route) is heated in the radiator 22, and the resulting hot water is stored in the hot water storage tank 50. The water is taken from the lower portion of the hot water storage tank 50, and then flows into the radiator 22 again, where it is heated to hot water.

Conversely, when the water temperature detected by the temperature sensor 61 is equal to or higher than the above predetermined temperature (medium temperature condition), the controller 6 controls the three-way valve 63 so that the water is circulated not through the bypass pipe 54. Specifically, the controller 6 sets the three-way valve 63 so that the upstream part 51a and the downstream part 51b of the three-way valve 63 in the supply pipe 51 are communicated with each other. As a result, the second route passing through both of the liquid cooling heat exchanger 24 and the radiator 22 is selected.

In the medium temperature condition, the water flowing into the liquid cooling heat exchanger 24 has a higher temperature than the refrigerant flowing into the liquid cooling heat exchanger 24. The refrigerant circulating through the refrigerant circuit 3 operates in the same manner as in the first embodiment. On the other hand, the water circulating through the circulation path 5 (second route) is heated in the radiator 22, and the resulting hot water is stored in the hot water storage tank 50. Medium temperature water that has not released sufficient heat in the heater 4 is stored in the lower portion of the hot water storage tank 50. The medium temperature water is taken from the lower portion of the hot water storage tank 50, and flows into the liquid cooling heat exchanger 24, where it exchanges heat with the refrigerant flowing out of the internal heat exchanger 23A. As a result, the water is cooled to a low temperature state. The low temperature water flows into the radiator 22 again and is heated to hot water.

### <Heating operation>

When a user turns on a heating switch (not shown), for example, the controller 6 rotates the heating pump 65. Thereby, the hot water stored in the hot water storage tank 50 is fed to the heater 4 for performing heating.

The same advantageous effects can be obtained in the present embodiment as in the first embodiment. In the present embodiment, the heated hot water can be stored once in the hot water storage tank 50. Therefore, for example, in the case where heating is interrupted and then resumed, the hot water stored in the hot water storage tank 50 can be fed to the heater 4 before the water that has cooled down during the interruption of the heating operation is reheated in the heat pump 20A, and thereby the heating operation can be resumed quickly.

Furthermore, according to the present embodiment, high temperature hot water can be produced at low electricity prices during night hours and this hot water can be stored in the hot water storage tank 50. Therefore, the running cost of the heating operation can be reduced.

### <Modification>

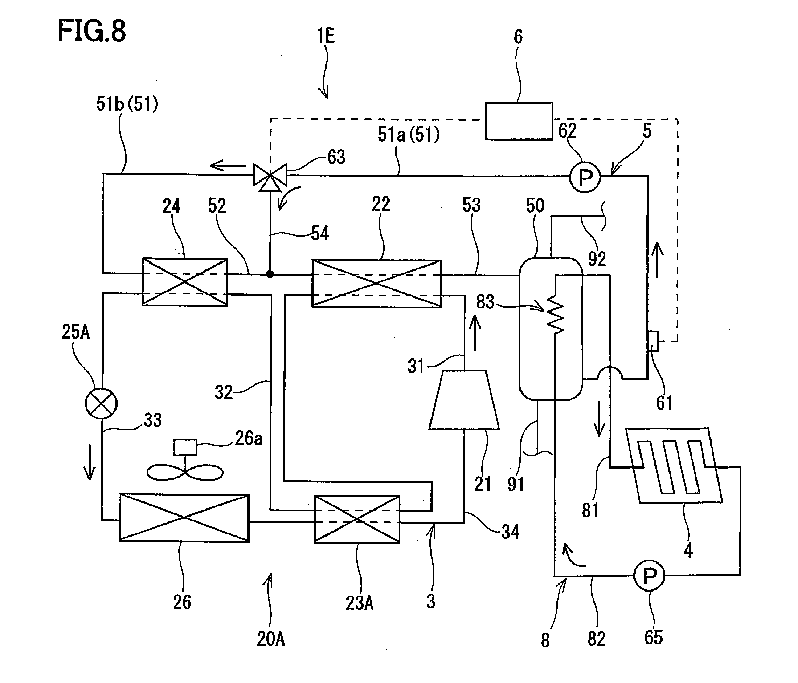

A water inlet pipe 91 (see Fig. 8) for supplying tap water to the hot water storage tank 50 may be provided in the hot water storage tank 50. With this structure, the temperature of hot water flowing into the heater 4 can be controlled freely by mixing tap water and hot water flowing into the heater 4 or exchanging heat between them. Furthermore, since tap water can be used to control the temperature of water flowing into the heater 4, the optimum temperature water is allowed to flow into the heater 4 even if the temperature of hot water stored in the hot water storage tank 50 is higher than that of hot water to be used in the heater 4. As a result, the amount of heat stored in the hot water storage tank 50 can be increased. Therefore, even if the operation of the heat pump 20Ais stopped for a long time, heating operation can be continued in the heating circuit 8. Alternatively, a mixing valve 91 may be provided in the feed pipe 81 to connect the water inlet pipe 91 to this mixing valve.

A hot water outlet pipe 92 (see Fig. 8) for withdrawing hot water from the hot water storage tank 50 also may be provided in the hot water storage tank 50. With this structure, hot water also can be supplied during heating operation.

Needless to say, the heat pump 20B shown in Fig. 4 using the expander 25B as the expansion member or the heat pump 20C shown in Fig. 6 using the ejector 25C as the expansion member can be used in the embodiment described above.

### (Fifth Embodiment)

Fig. 8 shows a heat pump heating system 1E according to the fifth embodiment of the present invention. The heat pump heating system 1E of the present embodiment is different from the heat pump heating system 1D of the fourth embodiment in that an in-tank heat exchanger 83 is disposed in the hot water storage tank 50. Furthermore, the water inlet pipe 91 is connected to the lower portion of the hot water storage tank 50, and the hot water outlet pipe 92 is connected to the upper portion of the hot water storage tank 50.

The in-tank heat exchanger 83 is designed to heat a heat carrier that is a second liquid by means of the hot water stored in the hot water storage tank 50. The in-tank heat exchanger 83 is connected to the heater 4 by the feed pipe 81 and the return pipe 82. When the heating pump 65 is rotated, the heat carrier that has been heated in the in-tank heat exchanger 83 is fed to the heater 4 through the feed pipe 81, and the heat carrier that has released heat in the heater 4 is returned to the in-tank heat exchanger 83 through the return pipe 82. As the heat carrier, for example, an antifreeze liquid can be used, but water preferably is used because it is available at low cost and in large quantities.

Since the controller 6 performs control in the same manner as in the fourth embodiment, the description thereof is not repeated here. It should be noted, however, that during the heating operation, the heat carrier that has exchanged heat with the hot water stored in the hot water storage tank 50 releases heat in the heater 4, that is, the heat of the hot water is dissipated through the heat carrier in the heater 4, and thereby heating is performed.

The same advantageous effects can be obtained in the present embodiment as in the fourth embodiment.

### (Sixth Embodiment)

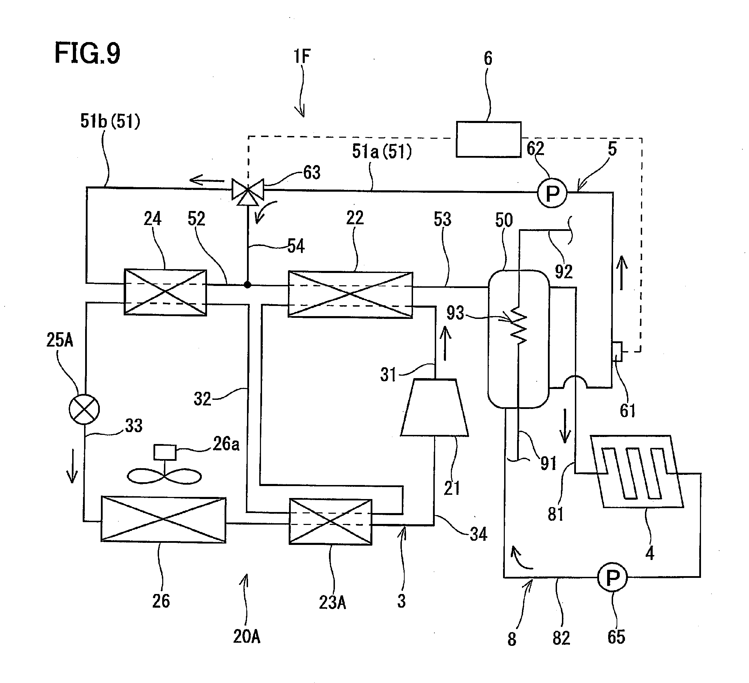

Fig. 9 shows a heat pump heating system 1F according to the sixth embodiment of the present invention. The heat pump heating system 1F of the present embodiment includes a structure for hot water supply in addition to the heat pump heating system 1D of the fourth embodiment. Specifically, a hot water supply heat exchanger 93 is disposed in the hot water storage tank 50, and the water inlet pipe 91 and the hot water outlet pipe 92 are connected to this hot water supply heat exchanger 93. That is, in the present embodiment, tap water flowing from the water inlet pipe 91 to the hot water outlet pipe 92 is heated by means of hot water in the hot water storage tank 50 so as to produce hot water.

### INDUSTRIAL APPLICABILITY

The heat pump heating system of the present invention is useful as a means for improving the COP of a heat pump through the use of medium temperature water produced in a heater.

## Claims

1. A heat pump heating system (1A- 1 F) comprising:
a refrigerant circuit (3) including a compressor (21) for changing a low pressure refrigerant to a high pressure refrigerant, a radiator (22) for allowing the high pressure refrigerant to release heat, an expansion member for changing the high pressure refrigerant to the low pressure refrigerant, and an evaporator (26) for allowing the low pressure refrigerant to absorb heat;
a circulation path (5) for circulating a liquid through the radiator (22) to produce a heated liquid;
a heater (4) for dissipating heat of the heated liquid;
an internal heat exchanger(23A, 23B), provided in the refrigerant circuit (3), for transferring heat from the high pressure refrigerant that has flown through the radiator (22) to the low pressure refrigerant;
**characterized by**
a liquid cooling heat exchanger (24) provided on a downstream side of the internal heat exchanger (23A, 23B) and on an upstream side of the expansion member in the refrigerant circuit (3), the liquid cooling heat exchanger (24) receiving the high pressure refrigerant flowing out of the internal heat exchanger(23A, 23B), the liquid cooling heat exchanger (24) further provided on a downstream side of the heater (4) in the circulation path (5) for circulating a liquid, the liquid cooling heat exchanger (24) thereby being configured to cool the liquid flowing through the circulation path (5) by means of exchanging heat between the high pressure refrigerant flowing out of the internal heat exchanger (23A, 23B) and the liquid flowing out of the heater (4) before the liquid flows into the radiator (22).

2. The heat pump heating system according to claim 1, wherein the liquid flowing into the liquid cooling heat exchanger (24) has a higher temperature than the high pressure refrigerant flowing into the liquid cooling heat exchanger (24).

3. The heat pump heating system according to claim 1 or 2, wherein the internal heat exchanger (23A) is designed to exchange heat between the high pressure refrigerant flowing out of the radiator (22) and the low pressure refrigerant flowing out of the evaporator (26).

4. The heat pump heating system according to claim 1 or 2, wherein the internal heat exchanger (23B) is designed to exchange heat between the high pressure refrigerant flowing out of the radiator (22) and the low pressure refrigerant before flowing into the evaporator (26).

5. The heat pump heating system according to any one of claims 1 to 4, wherein the expansion member is an expansion valve, an expander for recovering power from the expanding refrigerant, or an ejector.

6. The heat pump heating system according to any one of claims 1 to 5, wherein the circulation path (5) includes a supply pipe (51) for introducing the liquid from the heater to the liquid cooling heat exchanger (24), an intermediate pipe (52) for introducing the liquid from the liquid cooling heat exchanger (24) to the radiator (22), and a recovery pipe (53) for introducing the liquid in the form of the heated liquid from the radiator (22) to the heater (4).

7. The heat pump heating system according to any one of claims 1 to 5, wherein
the circulation path (5) includes a tank (50) for storing the heated liquid, a supply pipe (51) for introducing the liquid from the tank to the liquid cooling heat exchanger (24), an intermediate pipe (52) for introducing the liquid from the liquid cooling heat exchanger (24) to the radiator (22), and a recovery pipe (53) for introducing the liquid in the form of the heated liquid from the radiator (22) to the tank (50), and
the heat pump heating system further comprises:
a feed pipe (81) for feeding the heated liquid stored in the tank (50) to the heater (4); and
a return pipe (82) for returning the heated liquid that has released heat in the heater (4) to the tank (50).

8. The heat pump heating system according to any one of claims 1 to 5, wherein
the circulation path (5) includes a tank (50) for storing the heated liquid, a supply pipe (51) for introducing the liquid from the tank (50) to the liquid cooling heat exchanger (24), an intermediate pipe (52) for introducing the liquid from the liquid cooling heat exchanger (24) to the radiator (22), and a recovery pipe (53) for introducing the liquid in the form of the heated liquid from the radiator (22) to the tank (50), and
the heat pump heating system further comprises:
an in-tank heat exchanger (83), disposed in the tank (50), for heating a heat carrier by means of the heated liquid stored in the tank (50);
a feed pipe (81) for feeding the heat carrier that has been heated in the in-tank heat exchanger (83) to the heater (4); and
a return pipe (82) for returning the heat carrier that has released heat in the heater (4) to the in-tank heat exchanger (83).

9. The heat pump heating system according to claim 7 or 8, wherein
the liquid is water,
the heated liquid is hot water, and
the heat pump heating system further comprises:
a water inlet pipe (91) for supplying tap water to the tank (50); and
a hot water outlet pipe (92) for withdrawing the hot water from the tank (50).

10. The heat pump heating system according to any one of claims 6 to 9, wherein the circulation path (5) further includes a bypass pipe (54) for connecting the supply pipe (51) and the intermediate pipe (52), and a switching member for switching between a circulation of the liquid not through the bypass pipe (54) and a circulation of the liquid through the bypass pipe (54).

11. The heat pump heating system according to claim 10, wherein
the supply pipe (51) is provided with a temperature sensor (61) for detecting the temperature of the liquid flowing into the supply pipe (51), and
the heat pump heating system further comprises a controller (6) for controlling the switching member so that the liquid is circulated through the bypass pipe (54) when the temperature of the liquid detected by the temperature sensor (61) is lower than a predetermined temperature and that the liquid is circulated not through the bypass pipe (54) when the temperature of the liquid detected by the temperature sensor (61) is equal to or higher than the predetermined temperature.

12. The heat pump heating system according to any one of claims 1 to 11, wherein the refrigerant is carbon dioxide.

## Patentansprüche

1. Wärmepumpen-Heizsystem (1A - 1F), Folgendes umfassend:
einen Kältekreislauf (3), der einen Kompressor (21) umfasst, zum Verändern eines Niederdruck-Kältemittels zu einem Hochdruck-Kältemittel, einen Kühler (22) zum Ermöglichen, dass das Hochdruck-Kältemittel Wärme freisetzt, ein Expansionselement zum Verändern des Hochdruck-Kältemittels zu dem Niederdruck-Kältemittel, und einen Verdampfer (26) zum Ermöglichen, dass das Niederdruck-Kältemittel Wärme absorbiert;
einen Zirkulationspfad (5) zum Zirkulieren einer Flüssigkeit durch den Kühler (22), um eine erwärmte Flüssigkeit zu produzieren;
eine Heizvorrichtung (4) zum Abführen von Wärme von der erwärmten Flüssigkeit;
einen inneren Wärmetauscher (23 A, 23 B), vorgesehen in dem Kältekreislauf (3), zum Übertragen von Wärme von dem Hochdruck-Kältemittel, das durch den Kühler (22) geflossen ist, auf das Niederdruck-Kältemittel;
**gekennzeichnet durch**
einen Flüssigkeitskühlungs-Wärmetauscher (24), der auf einer stromabwärtigen Seite des inneren Wärmetauschers (23 A, 23 B) und auf einer stromaufwärtigen Seite des Expansions-Elements in dem Kältekreislauf (3) vorgesehen ist, wobei der Flüssigkeitskühlungs-Wärmetauscher (24) das Hochdruck-Kältemittel empfängt, das aus dem inneren Wärmetauscher (23 A, 23 B) heraus fließt, wobei der Flüssigkeitskühlungs-Wärmetauscher (24) ferner auf einer stromabwärtigen Seite der Heizvorrichtung (4) in dem Zirkulationspfad (5) zum Zirkulieren einer Flüssigkeit vorgesehen ist, wobei der Flüssigkeitskühlungs-Wärmetauscher (24) auf eine Weise konfiguriert ist, um die Flüssigkeit zu kühlen, die **durch** den Zirkulationspfad (5) fließt, **durch** den Austausch von Wärme zwischen dem Hochdruck-Kältemittel, das aus dem inneren Wärmetauscher (23 A, 23 B) fließt, und der Flüssigkeit, die aus dem Heizvorrichtung (4) fließt, bevor die Flüssigkeit in den Kühler (22) strömt.

2. Wärmepumpen-Heizsystem nach Anspruch 1, wobei die Flüssigkeit, die in den Flüssigkeitskühlungs-Wärmetauscher (24) fließt, eine höhere Temperatur aufweist als das Hochdruck-Kältemittel, das in den Flüssigkeitskühlungs-Wärmetauscher (24) fließt.

3. Wärmepumpen-Heizsystem nach Anspruch 1 oder 2, wobei der innere Wärmetauscher (23 A) ausgelegt ist, um Wärme zwischen dem Hochdruck-Kältemittel, das aus dem Kühler (22) fließt, und dem Niederdruck-Kältemittel, das aus dem Verdampfer (26) fließt, auszutauschen.

4. Wärmepumpen-Heizsystem nach Anspruch 1 oder 2, wobei der innere Wärmetauscher (23 B) ausgelegt ist, um Wärme zwischen dem Hochdruck-Kältemittel, das aus dem Kühler (22) fließt, und dem Niederdruck-Kältemittel auszutauschen, bevor dieses in den Verdampfer (26) fließt.

5. Wärmepumpen-Heizsystem nach einem der Ansprüche 1 bis 4, wobei das Expansionselement ein Expansionsventil, eine Expansionsvorrichtung zum Rückgewinnen von Energie aus dem expandierenden Kühlmittel oder ein Ejektor ist.

6. Wärmepumpen-Heizsystem nach einem der Ansprüche 1 bis 5, wobei der Zirkulationspfad (5) ein Zufuhrrohr (51) umfasst, zum Zuführen der Flüssigkeit aus der Heizvorrichtung zu dem Flüssigkeitskühlungs-Wärmetauscher (24), ein Zwischenrohr (52) zum Zuführen der Flüssigkeit aus dem Flüssigkeitskühlungs-Wärmetauscher (24) zum Kühler (22), und eine Rückgewinnungsleitung (53) zum Zuführen der Flüssigkeit in Form der erwärmten Flüssigkeit von dem Kühler (22) zu der Heizvorrichtung (4).

7. Wärmepumpen-Heizsystem nach einem der Ansprüche 1 bis 5, wobei
der Zirkulationspfad (5) einen Tank (50) zum Speichern der erwärmten Flüssigkeit, ein Zufuhrrohr (51) zum Zuführen der Flüssigkeit aus dem Tank in den Flüssigkeitskühlungs-Wärmetauscher (24), ein Zwischenrohr (52) zum Zuführen der Flüssigkeit aus dem Flüssigkeitskühlungs-Wärmetauscher (24) zum Kühler (22) und eine Rückgewinnungsleitung (53) zum Zuführen der Flüssigkeit in Form der erwärmten Flüssigkeit aus dem Kühler (22) zum Tank (50) umfasst, und
das Wärmepumpen-Heizsystem ferner umfasst:
ein Zuführungsrohr (81) zum Zuführen der in dem Tank (50) gespeicherten erwärmten Flüssigkeit zu der Heizvorrichtung (4); und
eine Rücklaufleitung (82) zum Rückführen der erwärmten Flüssigkeit, welche Wärme in der Heizvorrichtung (4) abgeführt hat, in den Tank (50).

8. Wärmepumpen-Heizsystem nach einem der Ansprüche 1 bis 5, wobei
der Zirkulationspfad (5) einen Tank (50) zum Speichern der erwärmten Flüssigkeit, ein Zufuhrrohr (51) zum Zuführen der Flüssigkeit aus dem Tank (50) in den Flüssigkeitskühlungs-Wärmetauscher (24), ein Zwischenrohr (52) zum Zuführen der Flüssigkeit aus dem Flüssigkeitskühlungs-Wärmetauscher (24) zum Kühler (22) und eine Rückgewinnungsleitung (53) zum Zuführen der Flüssigkeit in Form der erwärmten Flüssigkeit aus dem Kühler (22) zum Tank (50), und
das Wärmepumpen-Heizsystem ferner umfasst:
einen Wärmetauscher im Inneren des Tanks (83), welcher in dem Tank (50) angeordnet ist, zum Erwärmen eines Wärmeträgers durch die erwärmte Flüssigkeit, die in dem Tank (50) gespeichert wird;
ein Zuführungsrohr (81) zum Zuführen des Wärmeträgers, der in dem Wärmetauscher im Inneren des Tanks (83) erwärmt wurde, zu der Heizvorrichtung (4); und
eine Rücklaufleitung (82) zum Rückführen des Wärmeträgers, welcher Wärme in der Heizvorrichtung (4) abgegeben hat, in den Wärmetauscher im Inneren des Tanks (83).

9. Wärmepumpen-Heizsystem nach Anspruch 7 oder 8, wobei
die Flüssigkeit Wasser ist,
die erwärmte Flüssigkeit heißes Wasser ist, und
das Wärmepumpen-Heizsystem ferner Folgendes umfasst:
ein Wassereinlassrohr (91) zum Zuführen von Leitungswasser in den Tank (50); und
eine Heißwasser-Auslassleitung (92) zum Auslassen des heißen Wassers aus dem Tank (50).

10. Wärmepumpen-Heizsystem nach einem der Ansprüche 6 bis 9, wobei der Zirkulationspfad (5) ferner eine Umgehungsleitung (54) umfasst, zum Verbinden des Zufuhrrohrs (51) mit dem Zwischenrohr (52), und ein Schaltelement zum Umschalten zwischen einer Zirkulation der Flüssigkeit, die nicht durch die Umgehungsleitung (54) führt, und einer Zirkulation der Flüssigkeit, die durch die Umgehungsleitung (54) führt.

11. Wärmepumpen-Heizsystem nach Anspruch 10, wobei
das Zufuhrrohr (51) ausgestattet ist mit einem Temperatursensor (61) zum Erfassen der Temperatur der Flüssigkeit, die in das Zufuhrrohr (51) fließt, und
das Wärmepumpen-Heizsystem ferner eine Steuerung (6) zum Steuern des Schaltelements umfasst, so dass die Flüssigkeit durch die Umgehungsleitung (54) zirkuliert wird, wenn die durch den Temperatursensor (61) erfasste Temperatur der Flüssigkeit niedriger als eine vorbestimmte Temperatur ist, und dass die Flüssigkeit nicht durch die Umgehungsleitung (54) zirkuliert wird, wenn die durch den Temperatursensor (61) erfasste Temperatur der Flüssigkeit gleich oder höher als die vorbestimmte Temperatur ist.

12. Wärmepumpen-Heizsystem nach einem der Ansprüche 1 bis 11, wobei das Kältemittel Kohlendioxid ist.

## Revendications

1. Système de chauffage par pompe à chaleur (1A - 1 F), comprenant:
un circuit frigorifique (3) comprenant un compresseur (21) pour modifier un réfrigérant basse pression en un réfrigérant haute pression, un radiateur (22) pour permettre au réfrigérant haute pression de dégager de la chaleur, un élément d'expansion destiné à modifier le réfrigérant haute pression en ledit réfrigérant basse pression ainsi qu'un évaporateur (26) pour permettre au réfrigérant basse pression d'absorber de la chaleur;
un trajet de circulation (5) pour faire circuler un liquide à travers le radiateur (22) pour produire un liquide chauffé;
un dispositif de chauffage (4) pour dissiper de la chaleur dudit liquide chauffé;
un échangeur thermique interne (23A, 23B) prévu dans ledit circuit frigorifique (3) pour transférer de la chaleur du réfrigérant haute pression qui a circulé à travers le radiateur (22), au réfrigérant basse pression;
**caractérisé par**
un échangeur thermique de refroidissement de liquide (24) qui est prévu sur un côté aval de l'échangeur thermique interne (23A, 23B) et sur un côté amont de l'élément d'expansion dans le circuit frigorifique (3), ledit échangeur thermique de refroidissement de liquide (24) recevant le réfrigérant haute pression qui s'écoule de l'échangeur thermique interne (23A, 23B), ledit échangeur thermique de refroidissement de liquide (24) étant prévu en outre sur un côté aval du dispositif de chauffage (4) dans le trajet de circulation (5) pour faire circuler un liquide, ledit échangeur thermique de refroidissement de liquide (24) étant configuré de manière à refroidir le liquide s'écoulant à travers le trajet de circulation (5), par l'échange de chaleur entre le réfrigérant haute pression s'écoulant de l'échangeur thermique interne (23A, 23B) et le liquide s'écoulant du dispositif de chauffage (4), avant que le liquide s'écoule dans le radiateur (22).

2. Système de chauffage par pompe à chaleur selon la revendication 1, dans lequel le liquide s'écoulant dans l'échangeur thermique de refroidissement de liquide (24) présente une température supérieure à celle du réfrigérant haute pression s'écoulant dans ledit échangeur thermique de refroidissement de liquide (24).

3. Système de chauffage par pompe à chaleur selon la revendication 1 ou 2, dans lequel ledit échangeur thermique interne (23A) est conçu pour échanger de la chaleur entre le réfrigérant haute pression s'écoulant du radiateur (22) et le réfrigérant basse pression s'écoulant de l'évaporateur (26).

4. Système de chauffage par pompe à chaleur selon la revendication 1 ou 2, dans lequel ledit échangeur thermique interne (23B) est conçu pour échanger de la chaleur entre le réfrigérant haute pression s'écoulant du radiateur (22) et le réfrigérant basse pression avant que celui-ci s'écoule dans l'évaporateur (26).

5. Système de chauffage par pompe à chaleur selon l'une quelconque des revendications 1 à 4, dans lequel ledit élément d'expansion est une valve d'expansion, un détendeur pour récupérer de l'énergie du réfrigérant se détendant ou un éjecteur.

6. Système de chauffage par pompe à chaleur selon l'une quelconque des revendications 1 à 5, dans lequel le trajet de circulation (5) comprend un tuyau d'alimentation (51) destiné à amener le liquide depuis le dispositif de chauffage à l'échangeur thermique de refroidissement de liquide (24), un tuyau intermédiaire (52) destiné à amener le liquide depuis l'échangeur thermique de refroidissement de liquide (24) au radiateur (22) ainsi qu'une conduite de récupération (53) destinée à amener le liquide sous forme du liquide chauffé depuis le radiateur (22) au dispositif de chauffage (4).

7. Système de chauffage par pompe à chaleur selon l'une quelconque des revendications 1 à 5, dans lequel
le trajet de circulation (5) comprend un réservoir (50) pour stocker le liquide chauffé, un tuyau d'alimentation (51) destiné à amener le liquide depuis le réservoir à l'échangeur thermique de refroidissement de liquide (24), un tuyau intermédiaire (52) destiné à amener le liquide depuis ledit échangeur thermique de refroidissement de liquide (24) au radiateur (22), et une conduite de récupération (53) destinée à amener le liquide sous forme du liquide chauffé depuis le radiateur (22) au réservoir (50), et
ledit système de chauffage par pompe à chaleur comprend en outre:
un tuyau d'alimentation (81) destiné à amener au dispositif de chauffage (4) le liquide chauffé stocké dans le réservoir (50); et
une conduite de retour (82) pour faire retourner vers le réservoir (50) le liquide chauffé qui a dissipé de la chaleur dans le dispositif de chauffage (4).

8. Système de chauffage par pompe à chaleur selon l'une quelconque des revendications 1 à 5, dans lequel
le trajet de circulation (5) comprend un réservoir (50) pour stocker le liquide chauffé, un tuyau d'alimentation (51) destiné à amener le liquide depuis le réservoir (50) à l'échangeur thermique de refroidissement de liquide (24), un tuyau intermédiaire (52) destiné à amener le liquide depuis ledit échangeur thermique de refroidissement de liquide (24) au radiateur (22), et une conduite de récupération (53) destinée à amener le liquide sous forme du liquide chauffé depuis le radiateur (22) au réservoir (50), et
ledit système de chauffage par pompe à chaleur comprend en outre:
un échangeur thermique interne au réservoir (83), disposé à l'intérieur du réservoir (50), pour chauffer un fluide caloporteur par l'intermédiaire du liquide chauffé stocké dans le réservoir (50);
un tuyau d'alimentation (81) destiné à amener au dispositif de chauffage (4) le fluide caloporteur qui a été chauffé dans l'échangeur thermique interne au réservoir (83); et
une conduite de retour (82) pour faire retourner vers ledit échangeur thermique interne au réservoir (83) le fluide caloporteur qui a dissipé de la chaleur dans le dispositif de chauffage (4).

9. Système de chauffage par pompe à chaleur selon la revendication 7 ou 8, dans lequel
le liquide est de l'eau,
le liquide chauffé est de l'eau chaude et
le système de chauffage par pompe à chaleur comprend en outre:
un tuyau d'arrivée d'eau (91) destiné à amener de l'eau du robinet au réservoir (50); et
une conduite de sortie d'eau chaude (92) destinée à évacuer l'eau chaude dudit réservoir (50).

10. Système de chauffage par pompe à chaleur selon l'une quelconque des revendications 6 à 9, dans lequel ledit trajet de circulation (5) comprend en outre une conduite de dérivation (54) pour relier le tuyau d'alimentation (51) au tuyau intermédiaire (52), et un élément de commutation pour commuter entre une circulation du liquide qui ne passe pas par ladite conduite de dérivation (54) et une circulation du liquide qui passe par ladite conduite de dérivation (54).

11. Système de chauffage par pompe à chaleur selon la revendication 10, dans lequel
ledit tuyau d'alimentation (51) est équipé d'un capteur de température (61) destiné à détecter la température du liquide qui s'écoule dans le tuyau d'alimentation (51), et
le système de chauffage par pompe à chaleur comprend en outre une commande (6) pour commander ledit élément de commutation de sorte que le liquide est mis en circulation à travers la conduite de dérivation (54) lorsque la température du liquide détectée par le capteur de température (61) est inférieure à une température prédéterminée, et que le liquide n'est pas mis en circulation à travers la conduite de dérivation (54) lorsque la température du liquide détectée par le capteur de température (61) est égale ou supérieure à la température prédéterminée.

12. Système de chauffage par pompe à chaleur selon l'une quelconque des revendications 1 à 11, dans lequel le réfrigérant est du dioxyde de carbone.
